Europäisches Patentamt

(19) European Patent Office

Office européen des brevets

(11) Publication number: **0 165 689**

**B1**

## (12) EUROPEAN PATENT SPECIFICATION

(45) Date of publication of patent specification: **27.12.89**

(21) Application number: **85303122.7**

(22) Date of filing: **02.05.85**

(51) Int. Cl.⁴: **F 16 N 7/36**

(54) An automatic lubricating device for machine shafts.

(30) Priority: **04.05.84 ES 279441**

(43) Date of publication of application:
**27.12.85 Bulletin 85/52**

(45) Publication of the grant of the patent:
**27.12.89 Bulletin 89/52**

(84) Designated Contracting States:
**AT BE CH DE FR GB IT LI LU NL SE**

(56) References cited:
**GB-A- 715 315**
**GB-A- 766 531**
**GB-A-2 094 415**
**US-A-2 249 843**
**US-A-2 510 549**
**US-A-3 514 943**

(73) Proprietor: **Flores Agell, José Luis**
**Gran Via de les Corts Catalanes**
**855 Barcelona (ES)**

(72) Inventor: **Flores Agell, José Luis**
**Gran Via de les Corts Catalanes**
**855 Barcelona (ES)**

(74) Representative: **Godsill, John Kenneth et al**
**Haseltine Lake & Co. Hazlitt House 28**
**Southampton Buildings Chancery Lane**
**London WC2A 1AT (GB)**

Courier Press, Leamington Spa, England.

## Description

This invention relates to a lubrication arrangement for machine shafts, particularly, but not exclusively, of machines belonging to heavy service equipment and facilities.

A typical but not exclusive application of the lubrication arrangement which is the subject of this application is in cement plant kilns which, as known, should turn at low speed. To this end there is used a high-power reducing gear calculated to ensure the operation of the rotary kiln, together with a second reducing gear, commonly called a slew gear, which functions as an auxiliary gear and which is mechanically connected to the high-power reducing gear. When the slew gear acts as a motor, a large reduction takes place which entails the drive of the kiln at very low speed, as at the start of operation of the facility.

When the main reducing gear acts as the motor, a reduction is produced towards its output shaft and the kiln is driven at the rated speed. To prevent multiplication in the auxiliary reducing gear, it should be mechanically disconnected. This is usually carried out by means of a disconnecting device comprising a solid shaft, a hollow shaft and a freewheel, with a motor-driven pump for lubrication of the device. The latter is necessary since, in this phase, there is no internal oil bubbling since the slew or auxiliary reducing gear is idle.

The use of a motor-driven lubrication pump poses constructional and functional problems which are difficult to solve, involving, on the one hand, a need for continuous and costly maintenance, and on the other, the risk of interruptions in lubrication, with the consequence that this entails.

US—A—3,514,943 describes a lubrication arrangement for bearings in gas turbine engines. Lubricant is supplied via a pipe from a lubricant supply pump, the disadvantages of which have been mentioned heretofore. A screw feed principle is used to transfer the lubricant via the bearings and back to the supply pump.

GB—A—2,094,415 describes a self priming screw lubrication pump supplied by a central feed tube from a reservoir or sump. The pump utilises oppositely threaded regions on a central shaft to direct lubricant. The pump is particularly useful in a high speed environment, since the speed of rotation of the shaft affects the rate at which lubricant is drawn.

Neither of these documents address the problem of a self-contained lubrication system for low speed environments.

It is an object of the invention to provide a self-contained lubrication arrangement for machine shafts which obviates the need to use motor-driven pumps for lubrication.

According to the present invention there is provided a lubrication arrangement for machine shafts in which a first shaft comprising a cylindrical central zone flanked by two outer zones of progressively increasing diameter leading to respective threaded zones, the threads of which are directed in opposite directions, is mounted for rotation in a hollow shaft which is adapted to be coupled to the machine to be driven and which is mounted in the inner races of a first pair of spaced apart bearings to be lubricated, the outer races of said first pair being supported by respective support regions characterised in that:

the first shaft is mounted in inner races of a further pair of spaced apart bearings to be lubricated, the outer races of said further pair abutting the inner surface of the hollow shaft;

the hollow shaft is located in a lubricant reservoir and is provided with a plurality of holes which permit lubricant to flow from the reservoir to the interior of the hollow shaft; and

the direction of the threads of the threaded zones is such that the flow path of the lubricant is from the lubricant reservoir via the holes into a space defined between the central zone of the first shaft and the surrounding portion of the hollow shaft, from there in two oppositely directed branches via the threaded zones to respective ones of the further pair of bearings then radially to respective ones of the first pair of bearings and back to the reservoir.

A preferred embodiment of the invention permits lubrication pumps and other devices conventionally used to be dispensed with, affording additional advantages which make its installation highly appropriate on the shafts of machines subject to tough working conditions because of their applications, and especially with respect to working temperatures, operating rates and materials involved.

In addition, the assembly is made simpler mechanically, of greater security and with reduced maintenance needs.

For a better understanding of the present invention, and to show how the same may be carried into effect, reference will now be made by way of example to the accompanying drawings in which:-

Figure 1 is a view of a disconnecting assembly comprising a hollow shaft, a solid shaft and the mechanism connected with both, as well as part of the freewheel mechanism which forms a part of the assembly;

Figure 2 shows, in dihedral projections and with a partial section, the lubricant obturating and slinging component; and

Figure 3 shows, likewise in dihedral projections, the seal-holder ring which ensures the leak-tightness of the mechanism and supplements the guiding effect on lubricant flow.

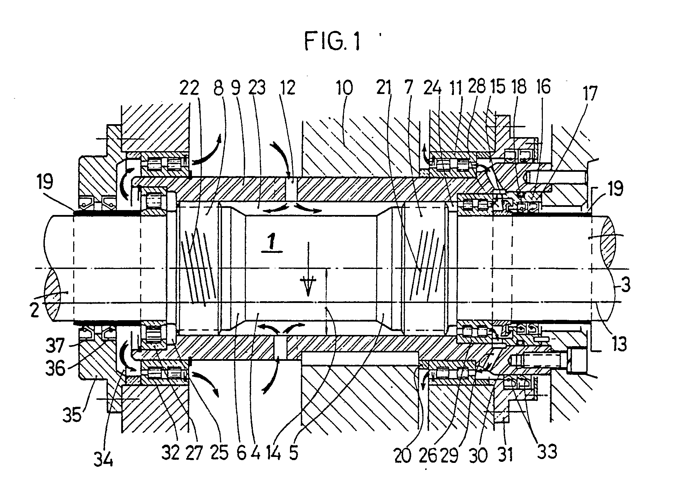

Referring to Figure 1, an axial shaft 1 is coupled at its end 2 to a main reducing gear which is connected, on the one hand, to the rotary kiln which is to be driven (in this example, a cement plant kiln), and on the other, to a motor-driven device of higher power for operation of the kiln at the rated speed.

The other end 3 of the shaft is coupled to a mechanism which forms a part of an anti-return device of the freewheel type, with a coupling system which is not described here.

A central zone 4 of the shaft 1, of smaller diameter, flanked by zones 5 and 6 of increasing diameter, defines a functional part whose aim will be stated later.

A hollow shaft 9, encasing and coaxial with the axial shaft 1, has a wheel 10 mounted on it, this wheel being connected to other mechanical components of the auxiliary reducing gear or slew. The hollow shaft 9 is mounted within bearings 11, and has a number of radial holes 12. The axial shaft 1 is mounted in the hollow shaft via a pair of spaced apart bearings 26, 27.

The assembly is housed inside a box-casing or housing, filled with a quantity of lubricating fluid e.g. oil whose depth 13 is approximately one half of the inner radius 14 of the hollow shaft 9. The fluid passes through the openings 12 and it bathes the components which connect the two shafts, essentially a sealing component in the form of an obturator-slinger 15 and a ring 16 which holds two seals 17 and 18.

Bushings 19, integral with the shaft 1, have the function of preventing wear of the shaft due to the effect of the seals which unavoidably rub against it; they are easy to remove by applying heat.

One feature of this lubrication arrangement is the existence on the axial shaft 1 of two cylindrical zones 7 and 8, flanking the zones 5 and 6 respectively, and carrying threaded parts 21 and 22. These parts 21, 22 are appropriately threaded in direction and length. In particular, these threaded parts run precisely opposite with respect to each other and are set to face in such a way that, according to the usual turning direction of the shaft 1, they produce an axial thrust effect on the lubricating oil similar to the effect produced by the coils of a screw pump.

The lubricating oil which reaches the level 13 flows through the holes 12 to a space 23 defined by the central zone 4 of smaller diameter of the shaft 1, and, as indicated by the arrows in Figure 1, flows toward respective end zones 24 and 25, which form pressure chambers in the shape of a circular crown. The oil then flows through the bearings 26 and 27 toward an annular chamber 28 defined by the obturator-slinger 15.

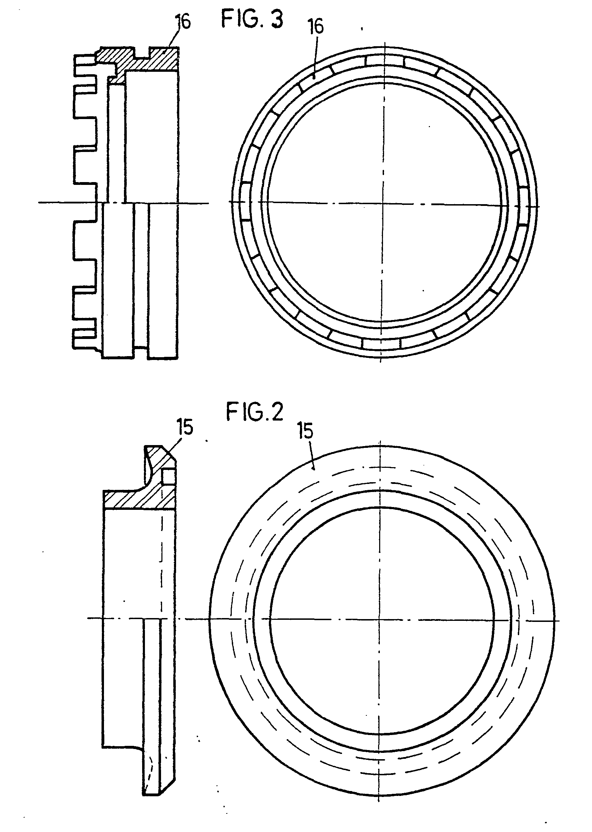

The obturator-slinger 15, whose complete shape may be seen in Figure 2, defines an intake part of rounded angular shape, which forms the annular chamber 28, so that when the lubricating oil penetrates it under pressure, after passing through the bearing 26, it collides and changes direction, after which the flow of lubricant is directed via an opening 29 which is radially and obliquely formed in the hollow shaft 9, and then flows outside the shaft.

The lubricating oil, which now occupies a space 30 defined between the shaft, a support 31, the bearings 11 and seals 33 in the right hand part of Figure 1, and likewise occupies a space 34 defined in the left hand part by a support 35 and a bearing 32, once again flows outside the housing of the machine according to the descending arrows in the lower part of Figure 1.

A separating ring 20 defines a space which ensures the return of the oil to the inside of the housing. Seals 36 and 37 in the left hand part supplement the leak-tightness of the oil chamber, withstanding the pressure determined by the thrust effect of the threaded parts 21 and 22.

**Claims**

1. A lubrication arrangement for machine shafts in which a first shaft (1) comprising a cylindrical central zone (4) flanked by two outer zones of progressively increasing diameter (5, 6) leading to respective threaded zones (7, 8), the threads of which are directed in opposite directions, is mounted for rotation in a hollow shaft (9) which is adapted to be coupled to the machine to be driven and which is mounted in the inner races of a first pair of spaced apart bearings (11, 32) to be lubricated, the outer races of said first pair being supported by respective support regions (31, 35) characterised in that:

the first shaft (1) is mounted in inner races of a further pair of spaced apart bearings (26, 27) to be lubricated, the outer races of said further pair abutting the inner surface of the hollow shaft (9);

the hollow shaft is located in a lubricant reservoir and is provided with a plurality of holes (12) which permit lubricant to flow from the reservoir to the interior of the hollow shaft; and

the direction of the threads of the threaded zones is such that the flow path of the lubricant is from the lubricant reservoir via the holes (12) into a space defined between the central zone (4) of the first shaft (1) and the surrounding portion of the hollow shaft (9), from there in two oppositely directed branches via the threaded zones (7, 8) to respective ones of the further pair of bearings (26, 27) then radially to respective ones of the first pair of bearings (11, 32) and back to the reservoir.

2. A lubrication arrangement as claimed in claim 1, in which a sealing component (15) functioning as a slinger is arranged at one end of the hollow shaft (9) and defines therewith an annular chamber (28) for lubricant, the annular chamber (28) communicating with the first pair of bearings (11, 32) via oblique, radial passageways (29) in the hollow shaft.

3. A lubrication arrangement as claimed in claim 2, in which the radial passageways (29) are symmetrically arranged circumferentially of the annular chamber (28).

4. A lubrication arrangement as claimed in claim 2 or 3, in which the region of the sealing component (15) defining the annular chamber (28) has a rounded angled cross-section, whereby lubricant is guided from the further pair of bearings (26, 27) to the radial passageways (29).

5. A lubrication arrangement as claimed in claim 2, 3 or 4, comprising an annular seal holder (16) having a facing surface structured so as to define with the sealing component (15) a complex flow path for blocking flow of lubricant.

6. A lubricant arrangement as claimed in claim 5, in which the seal holder (16) bears on its periphery a plurality of notches which determine a path for the lubricant as it flows through the radial passageways (29).

**Patentansprüche**

1. Schmierungsanordnung für Maschinenwellen. bei der eine erste Welle (1), die eine zylindrische Mittelzone (4) umfaßt, welche von zwei äußeren Zonen mit fortschreitend zunehmendem Durchmesser (5, 6) begrenzt ist, welche zu Gewindezonen (7, 8) hinführen, welche in entgegengesetzte Richtungen weisen, zur Drehung in einer Hohlwelle (9) angeordnet ist, die geeignet ist, mit der anzutreibenden Maschine gekoppelt zu werden und die in den inneren Laufringen eines ersten Paares von in Abstand voneinander vorgesehenen zu schmierenden Lagern (11, 32) angeordnet ist, wobei die äußeren Laufringe des genannten ersten Paares von Lagern von Tragbereichen (31,35) getragen sind, dadurch gekennzeichnet,

daß die erste Welle (1) in inneren Laufringen eines weiteren Paares von in Abstand voneinander vorgesehenen zu schmierenden Lagern (26, 27) angeordnet ist, deren äußere Laufringe an den Innenseiten der Hohlwelle (9) anliegen, daß die Hohlwelle in einem Schmiermittel-Vorratsbehälter angeordnet ist und mit einer Vielzahl von Löchern (12) versehen ist, welche ein Herausfließen des Schmiermittels aus dem Vorratsbehälter in den Innenraum der Hohlwelle ermöglichen,

und daß die Richtung der Gewinde der Gewindezonen derart ist, daß der Strömungsweg des Schmiermittels von dem Schmiermittel-Vorratsbehälter durch die Löcher (12) in einen zwischen der Mittelzone (4) der ersten Welle (1) und dem Umgebungsbereich der Hohlwelle (9) festgelegten Zwischenraum, von dort in zwei entgegengesetzt gerichtete Zweige durch die Gewindezonen (7, 8) zu den Lagern des weiteren Paares von Lagern (26, 27), sodann radial zu Lagern des ersten Paares von Lagern (11, 32) und zurück zu dem Vorratsbehälter verläuft.

2. Schmierungsanordnung nach Anspruch 1, bei der eine als Spritzring wirkende Dichtungskomponente (14) am einen Ende der Hohlwelle (9) angeordnet ist und mit dieser eine ringförmige Kammer (28) für ein Schmiermittel festlegt, wobei die ringförmige Kammer (28) mit dem ersten Paar von Lagern (11, 32) über schräge, radiale Durchgänge (29) in der Hohlwelle in Verbindung steht.

3. Schmierungsanordnung nach Anspruch 2, bei der die radialen Durchgänge (29) in Umfangsrichtung der ringförmigen Kammer (28) symmetrisch angeordnet sind.

4. Schmierungsanordnung nach Anspruch 2 oder 3, bei der der Bereich der die ringförmige Kammer (28) festlegenden Dichtungskomponente (15) einen abgerundeten winkligen Querschnitt aufweist, wodurch das Schmiermittel aus dem weiteren Paar von Lagern (26, 27) zu den radialen Durchgängen (29) geführt ist.

5. Schmierungsanordnung nach Anspruch 2, 3 oder 4, umfassend einen ringförmigen Dichtungshalter (16) mit einer derart ausgebildeten Frontseite, daß mit der Dichtungskomponente (15) ein komplexer Strömungsweg für die Sperrung der Schmiermittelströmung festgelegt ist.

6. Schmierungsanordnung nach Anspruch 5, bei der der Dichtungshalter (16) an seinem Umfang eine Vielzahl von Nuten trägt, die einen Weg für das Schmiermittel festlegen, wenn dieses durch die radialen Durchgänge (29) fließt.

**Revendications**

1. Dispositif de lubrification pour arbre de machine, dans lequel un premier arbre (1), comprenant une zone centrale cylindrique (4) flanquée par deux zones extérieures (5, 6) dont le diamètre augmente progressivement et qui aboutissent à des zones filetées correspondantes (7, 8) dont les filets sont dirigés dans des sens opposés, est monté en vue d'une rotation dans un arbre creux (9) qui est adapté pour être accouplé à la machine à entraîner et qui est monté dans les bagues intérieures d'une première paire de roulements espacés (11, 32) devant être lubrifiés, les bagues extérieures de ladite première paire étant supportées par des régions de support correspondantes (31, 35), caractérisé en ce que:

le premier arbre (1) est monté dans les bagues intérieures d'une autre paire de roulements espacés (26, 27) devant être lubrifiés, les bagues extérieures de ladite autre paire portant contre la surface intérieure de l'arbre creux (9);

l'arbre creux est placé dans un réservoir de lubrifiant et est pourvu d'une pluralité de trous (12) qui permettent au lubrifiant de s'écouler du réservoir jusqu'à l'intérieur de l'arbre creux;

la direction des filets des zones filetées est telle que le trajet d'écoulement de lubrifiant s'étend du réservoir du lubrifiant, par l'intermédiaire des trous (12), jusque dans un espace définit entre la zone centrale (4) du premier arbre (1) et la partie environnante de l'arbre creux (9), de là dans deux branches dirigées de façon opposée, par l'intermédiaire des zones filetées (7, 8), jusqu'aux roulements correspondants de l'autre paire de roulements (26, 27) puis radialement jusqu'aux roulements correspondants de la première paire de roulements (11, 32) et revient jusqu'au réservoir.

2. Dispositif de lubrification selon la revendication 1, dans lequel un élément d'étanchéité (15) fonctionnant comme une bague d'étanchéité est disposé à une des extrémités de l'arbre creux (9) et définit avec ce dernier une chambre annulaire (28) pour le lubrifiant, la chambre annulaire (28) communiquant avec la première paire de roulements (11, 32) par l'intermédiaire de passages radiaux et obliques (29) formés dans l'arbre creux.

3. Dispositif de lubrification selon la revendication 2, dans lequel les passages radiaux (29) sont disposés symétriquement dans le sens circonférentiel de la chambre annulaire (28).

4. Dispositif de lubrification selon la revendication 2 ou 3, dans lequel la région de l'élément d'etanchéité (15) définissant la chambre annulaire (28) a une section droite à angles arrondis, grâce à quoi le lubrifiant est guidé de l'autre paire de roulements (26, 27) jusqu'aux passages radiaux (29).

5. Dispositif de lubrification selon la revendication 2, 3 ou 4, comprenant un support annulaire (16) de joint d'étanchéité, comportant une surface de portée structurée de manière à définir avec l'élément d'étanchéité (15) un trajet d'écoulement complexe pour bloquer l'écoulement du lubrifiant.

6. Dispositif de lubrification selon la revendication 5, dans lequel le support (16) de joint d'étanchéité porte sur sa périphérie une pluralité d'encoches qui déterminent un trajet pour le lubrifiant au fur et à mesure que celui-ci s'écoule à travers les passages radiaux (29).

FIG. 1

EP 0 165 689 B1

FIG. 3

16    16

FIG.2

15    15

2